# EUROPÄISCHE PATENTSCHRIFT

(11) **EP 3 118 037 B1**
(45) Veröffentlichungstag und Bekanntmachung des Hinweises auf die Patenterteilung: **08.04.2020**
(21) Anmeldenummer: 16177944.2
(22) Anmeldetag: 05.07.2016
(51) Int. Cl.: B60J 1/17

(54) **FENSTERFÜHRUNGSSCHIENE**
WINDOW GUIDE CHANNEL
RAIL DE GUIDAGE DE FENETRE

(30) Priorität: 15.07.2015 DE 102015008913
(43) Veröffentlichungstag der Anmeldung: 18.01.2017
(73) Patentinhaber: Brose Schliesssysteme GmbH & Co. KG, 42369 Wuppertal (DE)
(72) Erfinder: Faust, Rene, 46282 Dorsten (DE); Heck, Daniel, 42369 Wuppertal (DE); Zibirre, Sebastian, 96450 Coburg (DE); Buth, Janik, 88045 Friedrichshafen (DE)
(74) Vertreter: Gottschald, Jan

(56) Entgegenhaltungen:
- FR-A1- 2 985 223
- US-A- 5 771 637
- US-A1- 2004 074 169

## Beschreibung

Die Erfindung betrifft ein Modul für ein Kraftfahrzeug nach Anspruch 1, sowie ein Verfahren zur Montage einer Fensterführungsschiene nach Anspruch 14.

Grundsätzlich sind verschiedene Fensterführungsschienen für Kraftfahrzeuge aus dem Stand der Technik bekannt. Beispielsweise ist in der FR 2 985 223 eine Fensterführungsschiene beschrieben, welche ein Profil, einen Strang und eine starre Stange aufweist. In der US 2004/0074169 A1 ist ein Stabilisierungsclip für eine Fensterführungsschiene beschrieben. In der US 5,771,637 ist eine Fensterführungsschiene mit einem kanalartigen Führungsbereich zur Führung einer Fensterscheibe beschrieben. Die Fensterführungsschiene ist ein gekrümmtes Spritzgussteil und erstreckt sich länglich. Sie gewährleistet eine seitliche Führung für die Fensterscheibe über die Höhe des kanalartigen Führungsbereichs. Die Führung erfolgt über an den seitlichen Führungen ausgebildete Federelemente. Die Fensterführungsschiene wird als gekrümmtes Spritzgussteil hergestellt.

Nachteilig an dieser Form der Fensterführung ist, dass diese individuell für jede Scheibe bzw. Scheibenkrümmung ausgelegt und gefertigt werden muss. Für jede Scheibenkrümmung wird eine separate Spritzgussform benötigt und die Spritzgussmaschine muss für den Wechsel von der Herstellung einer Fensterführungsschiene für eine erste Fensterscheibe zu einer zweiten Fensterscheibe mit einer anderen Geometrie umgerüstet werden. Hierdurch sind die Fertigungskosten für die Fensterführungsschienen hoch.

Der Erfindung liegt die Aufgabe zugrunde ein Modul, sowie ein Verfahren zur Montage einer Fensterführungsschiene in der Art auszugestalten und weiterzubilden, dass der fertigungstechnische Aufwand reduziert wird und eine Kostensenkung möglich ist.

Gelöst wird die obige Aufgabe bei einem Modul durch die Merkmale von Anspruch 1.

Dadurch, dass die Fensterführungsschiene für ein Kraftfahrzeug zu deren Montage entlang deren Längserstreckung zumindest um die Höhenrichtung biegbar ist und der Führungsbereich im gebogenen Zustand die Funktion der Führung der Fensterscheibe bereitstellt, kann eine einheitliche Fensterführungsschiene für verschiedene Fensterscheiben verwendet werden, indem diese passend gebogen montiert werden. Vorzugsweise wird die Fensterführungsschiene 2 dann als Linearteil mit linearer Erstreckung hergestellt.

Es ist nicht mehr notwendig, für jede Biegung einer Fensterscheibe ein eigenes Spritzgusswerkzeug anzufertigen. Durch die Verwendung der Fensterführungsschiene für verschiedene Fensterscheiben sind somit erhebliche Fertigungs- und Logistikkosten einsparbar.

Der Führungsbereich übernimmt die Funktion der Führung der Fensterscheibe. Er ist dazu ausgebildet, die auf die Fensterscheibe wirkenden Kräfte aufzunehmen. Lediglich Kräfte in Fensteröffnungs- bzw. Fensterschließrichtung werden vom Führungsbereich vorzugsweise nicht aufgenommen.

Für die Erfindung ist es nicht wesentlich, dass die Funktion der Fensterführung ausschließlich in gebogenem Zustand bereitgestellt wird, sondern, dass die Funktion der Führung zumindest auch in einem gebogenen Zustand bereitgestellt ist.

Ist die Biegbarkeit wie in Anspruch 2 beschrieben zum Teil elastisch, ist es möglich, die Fensterführungsschiene im montierten Zustand zu verspannen. Dies sorgt für einen festen und kein Klappern herbeiführenden Sitz der Fensterführungsschiene.

In einer Weiterbildung der Erfindung wird vorgeschlagen, dass der Befestigungsabschnitt der Fensterführungsschiene seitlich eine Abstützkante nach Art eines Flansches aufweist (Anspruch 4). Die Abstützkante ermöglicht es, Kräfte von den seitlichen Führungen über den Befestigungsbereich abzuleiten.

Die gemäß Anspruch 5 vorgeschlagene Schwächung der Fensterführungsschiene kann in einer bevorzugten Variante in der Abstützkante vorgesehen sein. Hierdurch wird zum einen eine stabile Führung der Fensterscheibe zwischen den seitlichen Führungen und zum anderen die Biegbarkeit der Fensterführungsschiene gewährleistet.

Die Fensterführungsschiene gemäß der Weiterbildung nach Anspruch 8 kann Federelemente zur Einstellung der Biegbarkeit der Fensterführungsschiene aufweisen. Hierdurch sind die Biegeeigenschaften der Fensterführungsschiene gut auslegbar.

Das Vorsehen von Befestigungselementen gemäß Anspruch 9 ermöglicht eine besonders einfache und zügige Montage.
Des Weiteren wird die eingangs gestellte Aufgabe verfahrensmäßig durch ein Verfahren gemäß Anspruch 14 gelöst. Auf alle Ausführungen zu der vorschlagsgemäßen Lehre darf verwiesen werden.
Die vorschlagsgemäße Fensterführungsschiene ist vorzugsweise einer Kraftfahrzeugtür eines Kraftfahrzeugs zugeordnet. Vorliegend ist der Begriff "Kraftfahrzeugtür" stets weit zu verstehen. Dabei kann es sich beispielsweise um eine Seiten- oder eine Hecktür, insbesondere eine Schwenk- oder Schiebetür, um eine Kraftfahrzeugklappe, insbesondere eine Heckklappe, o. dgl. handeln.
Im Folgenden wird die Erfindung anhand einer lediglich ein Ausführungsbeispiel darstellenden Zeichnung näher erläutert. In der Zeichnung zeigt
- Fig. 1: eine schematische Darstellung eines ersten Ausführungsbeispiels eines vorschlagsgemäßen Moduls mit einer Fensterführungsschiene und mit einem Modulträger in einer dreidimensionalen Ansicht,
- Fig. 2: die Fensterführungsschiene aus Fig. 1 in einer Aufsicht (2a), eine Fensterführungsschienenaufnahme des Modulträgers in einer Aufsicht (2b) und die Fensterführungsschiene aus Fig. 1, wie sie in der Fensterführungsschienenaufnahme des Modulträgers aufgenommen ist (2c),
- Fig. 3: drei Ansichten der Fensterführungsschiene, wie diese auch in den Fig. 1 und 2 gezeigt ist,
- Fig. 4: vier weitere Ausführungsbeispiele von Fernterführungsschienen für ein vorschlagsgemäßes Modul, wobei diese teilweise abgeschnitten sind,
- Fig. 5: zwei weitere Ausführungsbeispiele einer Fensterführungsschiene in einer Schnittansicht durch ihr Profil.

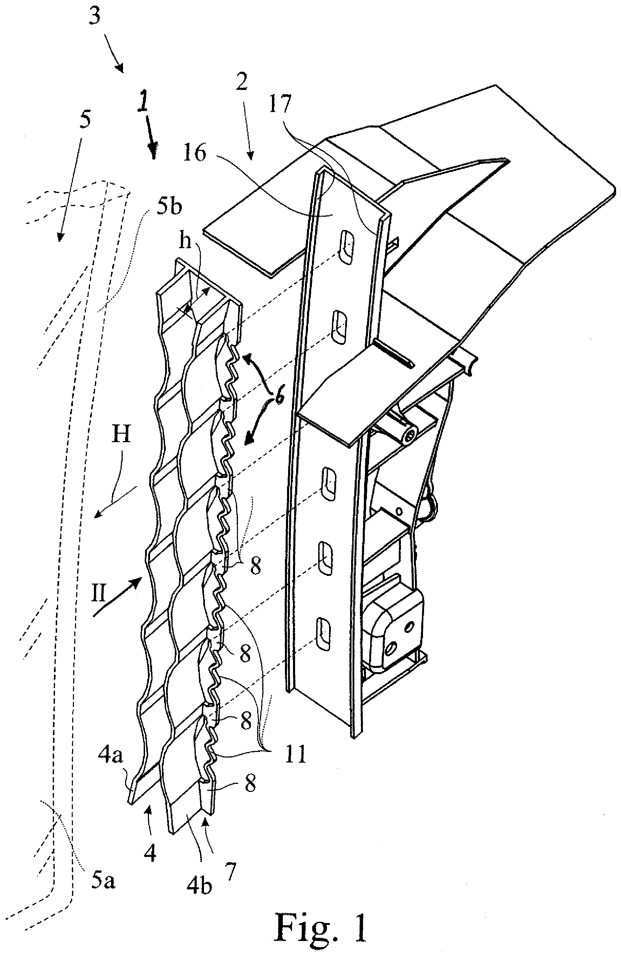

In der Fig. 1 ist eine Fensterführungsschiene 1 für ein Kraftfahrzeug in einer dreidimensionalen Ansicht mit einem Modulträger 2 gezeigt. In montierten Zustand bilden diese ein vorschlagsgemäßes Modul 3. Die Fensterführungsschiene 1 ist wie oben angesprochen einer nicht dargestellten Kraftfahrzeugtür eines Kraftfahrzeugs zugeordnet.

Die Fensterführungsschiene 1 weist einen kanalartigen Führungsbereich 4 zur Führung einer Fensterscheibe 5 auf. Dadurch lässt sich die Fensterscheibe 2a beispielsweise durch einen nicht dargestellten, insbesondere motorischen, Fensterheber o. dgl. verstellen.

Die Fensterführungsschiene 1 erstreckt sich länglich und stellt über eine Höhe h des kanalartigen Führungsbereichs 4 eine seitliche Führung für die Fensterscheibe 5 bereit.

Um die Montage zu erleichtern ist die Fensterführungsschiene 1 entlang ihrer Längserstreckung zumindest um die Höhenrichtung H biegbar. Vorzugsweise ist die Fensterführungsschiene 1 in unmontiertem Zustand ungebogen, Im gebogenen Zustand stellt der Führungsbereich 4 eine funktionsfähige Führung der Fensterscheibe 5 bereit.

Gemäß einer Weiterbildung der Lehre ist die Biegbarkeit der Fensterführungsschiene 1 um die Höhenrichtung H zumindest zum Teil elastisch. Dies ermöglicht ein Verklemmen der Fensterführungsschiene bei der Montage. Hierdurch können Klappergeräusche beim Fahren vermieden werden.

Zusätzlich zu der Biegbarkeit um die Höhenrichtung H kann die Fensterführungsschiene auch entlang ihrer Längserstreckung um eine Querrichtung, die quer zur Durchsichtfläche 5a der Fensterscheibe 5 ausgerichtet ist, biegbar sein. Zusammen mit der obigen Biegung um die Höhenrichtung H ist die Fensterführungsschiene 1 dann im Ergebnis zur Bereitstellung der Führung für die Fensterscheibe 5 helixabschnittsförmig biegbar.

In den Ausführungsbeispielen ist der Führungsbereich 4 dazu ausgebildet, auf die Fensterscheibe 5 wirkende Kräfte aufzunehmen. Der Befestigungsbereich 6 stellt bevorzugt die mechanische Stabilität für die Führung der Fensterscheibe 5 in der Fensterführungsschiene 1 bereit.

Der Befestigungsbereich 4 kann zwei seitliche Führungen 4a, 4b aufweisen, die die Fensterscheibe 5 in einer Querrichtung quer zu der Durchsichtfläche 5a der Fensterscheibe 5 abstützen. Zusätzlich oder alternativ kann der Führungsbereich 4 eine Bodenführung 4c zur Führung der Stirnseite 5b der Fensterscheibe 5 aufweisen.

Die Führungen 4a, 4b und/oder die Bodenführung 4c können auch nur abschnittsweise vorgesehen sein, dies insbesondere auch wechselseitig, und dennoch einen kanalartigen Führungsbereich 4 ausbilden. Insofern ist der Begriff "kanalartiger Führungsbereich" weit zu verstehen. Die Führung muss in einem Querschnitt nicht notwendigerweise beidseitig seitlich erfolgen. Vielmehr genügt es, wenn über die Länge der Fensterführungsschiene 1 eine beidseitige seitliche Führung 4a, 4b bereitgestellt ist.

In den Figuren weisen der Befestigungsbereich 6 der Fensterführungsschienen 1 seitlich zwei Abstützkanten 7 nach Art eines Flansches zum Abstützen des Führungsbereichs 4, insbesondere der seitlichen Führung 4a, 4b auf. Hierdurch wird die Stabilität der Fensterführungsschiene 1 erhöht. Alternativ kann der Befestigungsbereich 6 auch eine oder mehrere Abstützkanten 7 nach Art eines Flansches aufweisen. Hier und vorzugsweise bilden die Abstützkanten 7 jeweils eine im Wesentlichen ebene Abstützfläche gemeinsam mit der Unterseite der Bodenführung 4c.

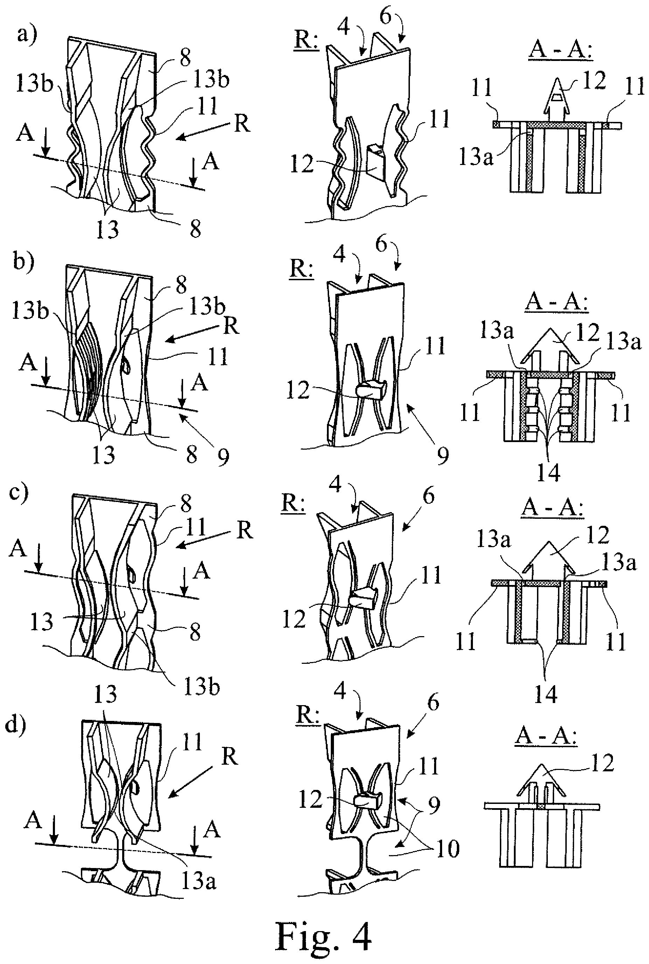

Hier und vorzugsweise ist die Fensterführungsschiene 1 zur Herstellung der Biegbarkeit entlang ihrer Längserstreckung lokal geschwächt. In den Ausführungsbeispielen und weiter vorzugsweise ist die Abstützkante 7 bzw. sind die Abstützkanten 7 lokal geschwächt. Im Ausführungsbeispiel der Fig. 4d ist zusätzlich zu einer Schwächung der Abstützkanten 7 auch die Bodenführung 4c der Fensterführungsschiene 1 lokal geschwächt.

Durch das Vorsehen der Abstützkanten 7 und deren gleichzeitiger lokaler Schwächung 9 kann die Biegefähigkeit bei hoher Stabilität der Fensterführungsschiene 1 eingestellt werden.
Der Begriff der Abstützkanten 7 ist vorliegend weit auszulegen. Tatsächlich bilden die Abstützkanten 7 Auflageflächen 7a aus, über welche sich die Fensterführungsschiene 1 abstützen kann. Vorliegend wird die Schwächung durch mehrere über die Längserstreckung verteilte Schwächungsstellen 9 bewirkt.
Hier und vorzugsweise ist die Schwächung der Fensterführungsschiene 1 durch Ausnehmungen 10 realisiert. Diese Ausnehmungen 10 stellen die zuvor beschriebenen Schwächungsstellen 9 dar und sind entlang der Längserstreckung der Fensterführungsschiene 1 verteilt. Die Ausnehmungen 10 können am Rand oder auch in der Fensterführungsschiene 1, vorzugsweise in dem Befestigungsbereich 6, weiter vorzugsweise in den Abstützkanten 7 und/oder in der Bodenführung 4c vorgesehen sein. In einer Weiterbildung der Erfindung wird vorgeschlagen, dass der Befestigungsbereich 6 zur Befestigung der Fensterführungsschiene 1 an einem Modulträger 2 ausgebildet ist.
Vorzugsweise weist die Abstützkante 7 des Befestigungsbereichs 6 Stützabschnitte 8 zur Übertragung von durch die Fensterführungsschiene 1 aufgenommenen Kräften auf den Modulträger 2 auf. Hierdurch können Kräfte von der Fensterscheibe 5 über die Fensterführungsschiene 1 optimal auf den Modulträger 2 übertragen werden.
Zur Einstellung der Biegbarkeit der Fensterführungsschiene 1 kann diese Federelemente 11 aufweisen. Im Ausführungsbeispiel der Fig. 4a und 4c sind die Federelemente 11 wellenförmig ausgestaltet. In dem Ausführungsbeispiel der Fig. 4b und 4d sind die Federelemente 11 sanduhrförmig ausgebildet. Vorzugsweise sind die Federelemente 11 integral mit der Fensterführungsschiene 1 ausgebildet.

Die Federelemente 11 können die Ausnehmungen 10 überbrücken und auf diese Weise deren Schwächung entgegenwirken. Bevorzugt sind die Federelemente 11 in den Abstützkanten 7 angeordnet. Die Stützabschnitte 8 können zum Teil durch Federelemente 11 verbunden sein. Vorzugsweise können sich Ausnehmungen mit Federelement 11 und ohne Federelement 11, wie in der Fig. 4d gezeigt, abwechseln oder alle Ausnehmungen Federelemente 11 aufweisen, wie in den Fig. 1 bis 4c gezeigt.

Hier und vorzugsweise weist die Fensterführungsschiene 1 im Befestigungsbereich 6 Befestigungselemente 12 auf. Besonders bevorzugt sind die Befestigungselemente 12 als Klipselemente ausgebildet. In einer Weiterbildung der Erfindung ist die Fensterführungsschiene 1 ein Spritzgussteil. Die Befestigungselemente sind beim Spritzgießen mit ausgebildet worden. Die Befestigungselemente 12 sind somit bevorzugt integral mit der Fensterführungsschiene 1 ausgebildet. Alternativ zu Befestigungselementen 12 kann der Befestigungsbereich 6 beim Spritzgießen auch Löcher für nicht gezeigte Befestigungsmittel wie beispielsweise Schrauben oder Nieten ausgebildet haben.

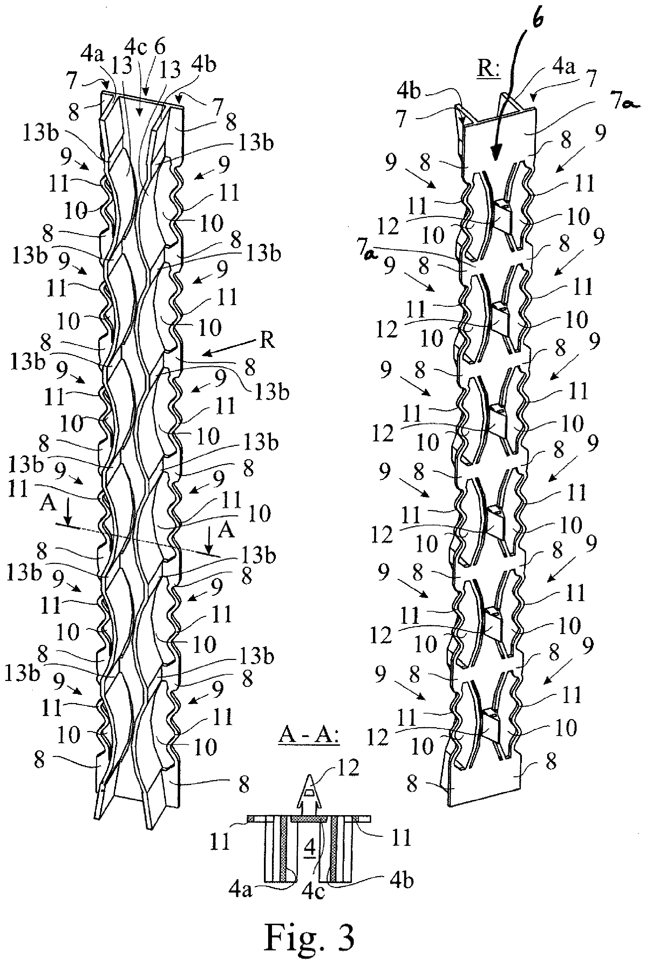

Gemäß einer Weiterbildung der Lehre können die seitlichen Führungen 4a, 4b Führungsfederelemente zum dämpfenden seitlichen Halten der Fensterscheibe 5 aufweisen. Die Führungsfederelemente 13 sind vorzugsweise von der Bodenführung 4c entkoppelt. In den Ausführungsbeispielen der Fig. 3, 4b, 4c und 4d sind die Führungsfederelemente 13 durch Schlitze 13a in der Bodenführung 4c entkoppelt. Im Ausführungsbeispiel der Fig. 4a sind die Führungsfederelemente 13 durch Schlitze 13a in den seitlichen Führungen 4a, 4b von der Bodenführung 4c entkoppelt.

Bevorzugt sind die Führungsfederelemente 13, wie in den Ausführungsbeispielen gezeigt, wellenartig ausgebildet. Sie erstrecken sich vorzugsweise im Wesentlichen über die Höhe h der seitlichen Führung 4a, 4b. Die Führungsfederelemente 13 können paarweise jeweils unmittelbar gegenüberliegend bezogen auf die Längserstreckung des kanalartigen Führungsbereichs 4 angeordnet sein, wie dies in den Ausführungsbeispielen der Fig. 3, 4a, 4b, 4d der Fall ist. Vorzugsweise sind die Führungsfederelemente 13 integral mit der Fensterführungsschiene 1 ausgebildet. Zusätzlich oder alternativ können die Führungsfederelemente 13 entlang der Längserstreckung des kanalartigen Führungsbereichs 4 paarweise versetzt zueinander ausgerichtet sein, wie dies beispielsweise im Ausführungsbeispiel der Fig. 4c der Fall ist.

Des Weiteren können sich die Führungsfederelemente 13 zu den Federelementen 11 entlang der Längserstreckung der Fensterführungsschiene 1 über dieselben Abschnitte der Fensterführungsschiene 1 erstrecken. Vorzugsweise erstrecken sich die Federelemente 11 und die Führungsfederelemente 13 jeweils auf einer Seite der Fensterführungsschiene 1 über jeweils denselben Abschnitt der Längserstreckung der Fensterführungsschiene 1. Auf diese Weise sind die Lager 13b der Führungsfederelemente 13 und die Stützabschnitte 8, zwischen denen sich die Federelemente 11 erstrecken, aneinander angrenzend angeordnet.

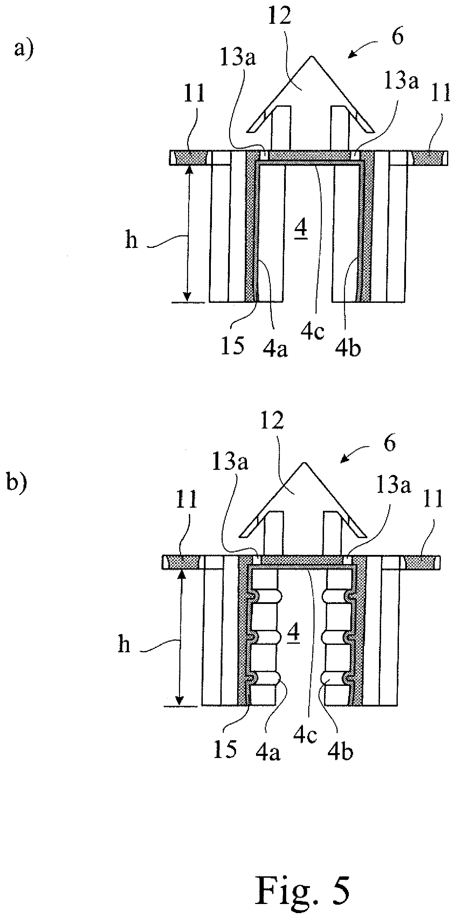

Die seitlichen Führungen 4a, 4b der Fensterführungsschiene 1 können die Kontaktfläche zwischen der Fensterführungsschiene 1 und der Fensterscheibe 5 reduzierende Erhebungen 14 aufweisen, wie diese beispielsweise in den Ausführungsbeispielen der Fig. 4b und 4c sowie 5b gezeigt sind.

Hier und vorzugsweise weist die Fensterführungsschiene 1 im unmontierten Zustand entlang ihrer Längsachse L mehrere zueinander formgleiche Abschnitte auf. Hierdurch ist eine homogene Biegung realisierbar und/oder eine Auslegung der Biegbarkeit der Fensterführungsschiene 1 vereinfacht. Zusätzlich oder alternativ kann die Fensterführungsschiene 1 im unmontierten Zustand achsensymmetrisch, insbesondere zu ihrer Längsachse L achsensymmetrisch ausgebildet sein.

Gemäß einer Ausgestaltung der Fensterführungsschiene 1 ist diese einstückig ausgebildet, insbesondere bis auf den Befestigungsbereich 6 oder einen Teil des Befestigungsbereichs 6 einstückig ausgebildet. Die Fensterführungsschiene 1 ist bevorzugt aus Kunststoff, insbesondere faserverstärktem Kunststoff, ausgebildet. Vorzugsweise handelt es sich bei dem Kunststoff um Polyoxymethylen oder um Polyethylen.

In einer Weiterbildung der Erfindung kann vorgesehen sein, dass der Führungsbereich zumindest teilweise oberflächenbehandelt, insbesondere beflockt, ist.

Zusätzlich oder alternativ kann der Führungsbereich 4 ein biegeschlaffes Flachmaterial 15 aufweisen, welches vorzugsweise durch ein Spritzgussmaterial bei der Herstellung der Fensterführungsschiene hinterspritzt wurde. Eine solche Fensterführungsschiene ist in der Fig. 5 gezeigt.

Bezüglich der bevorzugten weiteren Ausgestaltung der Fensterführungsschiene 1 und des Verfahrens zur Herstellung einer Fensterführungsschiene 1 mit biegeschlaffen Flachmaterial 15 wird auf die zeitglich mit der vorliegenden Anmeldung eingereichte und auf dieselbe Anmelderin zurückgehende Patentanmeldung verwiesen, welche hiermit insoweit zum Gegenstand der vorliegenden Anmeldung gemacht wird.

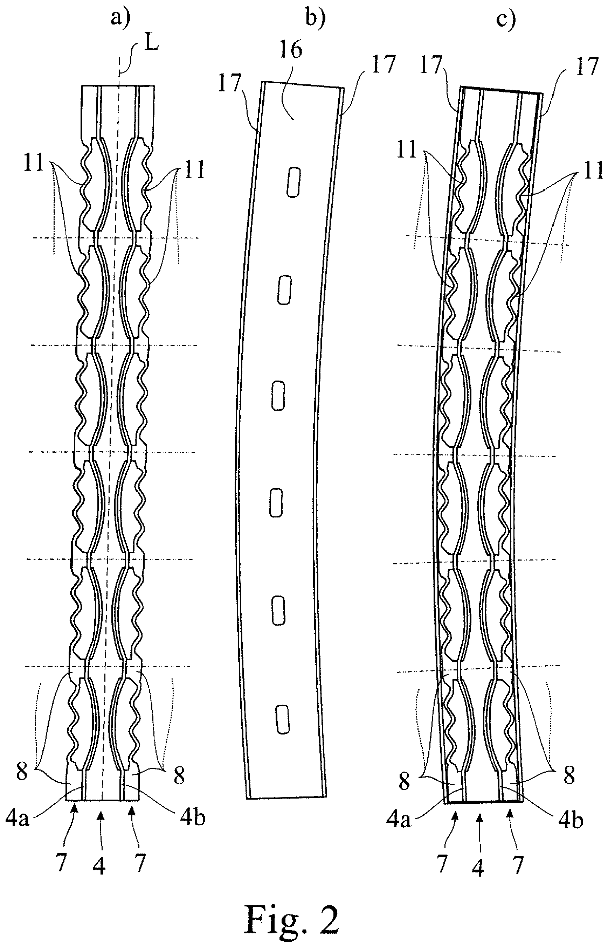

Bei einem vorschlagsgemäßen Modul 3 mit einem Modulträger 2 ist vorgesehen, dass dieses eine Fensterführungsschienenaufhahme 16 und eine darin aufgenommene Fensterführungsschiene 1 der zuvor beschriebenen Art aufweist. Die Fensterführungsschiene 1 ist im gebogenen Zustand an dem Modulträger 2 befestigt. Insbesondere kann die Fensterführungsschiene 1 an dem Modulträger 2 verspannt befestigt sein, wie dies in der Fig. 2c gezeigt ist. Durch das verspannte Befestigen können Fertigungstoleranzen ausgeglichen und ein Klappern der Fensterführungsschiene 2 vermieden werden. Ferner kann durch das verspannte Befestigen die Kontur der Fensterführungsschiene 1 an die Fensterscheibe 5 erzwungen werden.

Vorschlagsgemäß zwingt die Fensterführungsschienenaufnahme 16 der Fensterfuhrungsschiene 1 durch die Befestigung eine Kontur auf. Insbesondere kann die Fensterführungsschienenaufnahme 15 Halteschienen 17 aufweisen, welche die Fensterführungsschiene 1 seitlich halten. Bevorzugt werden die seitlichen Querkräfte auf die Fensterscheibe 5 über die Führung 4a, 4b in den Befestigungsbereich 6 und über die Abstützkanten 7 in die Halteschienen 16 und den Modulträger 2 abgeleitet. Der Kraftfluss über die Befestigungselemente 6 ist vorzugsweise geringer als der Kraftfluss über die Abstützkanten 7 in den Modulträger 2.

Während die seitlichen Führungen 4a, 4b die Fensterscheibe 5 sicher halten und führen, kann vorgesehen sein, dass die Fensterführungsschiene 1 erst im Verbund mit dem Modulträger 2 die notwendige Steifigkeit zur Führung der Fensterscheibe 5 aufweist. Erst hierdurch kann gegebenenfalls ein Tordieren der Fensterführungsschiene 1 wirksam vermieden werden.
Das Modul 2 ist vorzugsweise an einer Kraftfahrzeugtür festlegbar. In einer bevorzugten Ausführungsform trägt der Modulträger 2 des Moduls 3 ein nicht dargestelltes Kraftfahrzeugschloss und/oder einen Teil eines nicht dargestellten Türaußengriffs, In einer anderen Ausführungsform, welche als solche nicht dargestellt ist, trägt der Modulträger 2 neben der Fensterführungsschiene 1 einen Teil eines Türinnengriffs und/oder einen Fensterheber.
Bei der Montage des Moduls 3 wird eine Fensterführungsschiene 1 der zuvor beschriebenen Art an dem Modulträger 2 befestigt, indem vor oder während der Befestigung an den Modulträger 2 die Fensterführungsschiene 1 zumindest um die Höhenrichtung H gebogen wird, vgl. Fig. 2. Vorzugsweise wird die Biegung im Wesentlichen der Krümmung der Halteschienen des Modulträgers 2 angepasst.

Das vorgeschlagene Modul 3, sowie das vorgeschlagene Verfahren zur Montage der Fensterführungsschiene 2 ermöglichen eine kostengünstige und flexible Herstellung von Fensterführungsschienen 1.

## Patentansprüche

1. Modul für ein Kraftfahrzeug, wobei ein Modulträger (2), eine Fensterführungsschienenaufnahme (16) und eine darin aufgenommene Fensterführungsschiene (1) für ein Kraftfahrzeug vorgesehen ist, wobei die Fensterführungsschiene einen kanalartigen Führungsbereich (4) zur Führung einer Fensterscheibe (5) und einen Befestigungsbereich (6) zur Befestigung der Fensterführungsschiene (1) aufweist, wobei sich die Fensterführungsschiene (1) länglich erstreckt und über eine Höhe (h) des kanalartigen Führungsbereichs (4) eine seitliche Führung für die Fensterscheibe (5) bereitstellt und wobei die Fensterführungsschiene (1) zu deren Montage entlang deren Längserstreckung zumindest um die Höhenrichtung (H) biegbar ist und der Führungsbereich (4) im gebogenen Zustand die Funktion der Führung der Fensterscheibe (5) bereitstellt, wobei die Fensterführungsschiene im gebogenen Zustand an dem Modulträger befestigt ist und die Fensterführungsschienenaufhahme der Fensterführungsschiene durch die Befestigung eine Kontur aufzwingt.

2. Modul nach Anspruch 1, **dadurch gekennzeichnet, dass** die Biegbarkeit der Fensterführungsschiene (1) um die Höhenrichtung (H) zumindest zum Teil elastisch ist.

3. Modul nach Anspruch 1 oder 2, **dadurch gekennzeichnet, dass** der Führungsbereich (4) zwei seitliche Führungen (4a, 4b) aufweist, die die Fensterscheibe (5) in einer Querrichtung quer zu der Durchsichtfläche (5a) der Fensterscheibe (5) abstützen, und/oder, dass der Führungsbereich (4) eine Bodenführung (4c) zur Führung der Stirnseite (5b) der Fensterscheibe (5) aufweist.

4. Modul nach einem der vorhergehenden Ansprüche, **dadurch gekennzeichnet, dass** der Befestigungsbereich (6) der Fensterführungsschiene (1) seitlich eine Abstützkante (4) oder zwei Abstützkanten (4) oder mehrere Abstützkanten (7) nach Art eines Flansches zum Abstützen des Führungsbereichs (4), insbesondere der seitlichen Führungen (4a, 4b), aufweist.

5. Modul nach einem der vorhergehenden Ansprüche, ggf. nach Anspruch 4, **dadurch gekennzeichnet, dass** die Fensterführungsschiene (1) zur Herstellung oder Verbesserung der Biegbarkeit entlang ihrer Längserstreckung lokal geschwächt ist, vorzugsweise, dass die Abstützkante (7) oder die Abstützkanten (7) lokal geschwächt ist bzw. sind, weiter vorzugsweise, dass nicht nur die Abstützkanten (7) lokal geschwächt sind, sondern auch die Bodenführung (4c) der Fensterführungsschiene (1) lokal geschwächt ist.

6. Modul nach Anspruch 4 und ggf. nach Anspruch 5, **dadurch gekennzeichnet, dass** die Schwächung der Fensterführungsschiene (1) durch Ausnehmungen (10) realisiert ist.

7. Modul nach Anspruch 4 und ggf. nach einem der Ansprüche 5 oder 6, **dadurch gekennzeichnet, dass** der Befestigungsbereich (6) zur Befestigung der Fensterführungsschiene (1) an einem Modulträger (2) ausgebildet ist, vorzugsweise, dass die Abstützkanten (7) des Befestigungsbereichs (7) Stützabschnitte (8) zur Übertragung von durch die Fensterführungsschiene (1) aufgenommenen Kräften auf den Modulträger (2) aufweisen.

8. Modul nach einem der vorhergehenden Ansprüche, **dadurch gekennzeichnet, dass** die Fensterführungsschiene (1) Federelemente (11) zur Einstellung der Biegbarkeit der Fensterführungsschiene (1) aufweist, vorzugsweise, dass die Federelemente (11) wellenlinienförmig und/oder sanduhrförmig ausgebildet sind.

9. Modul nach einem der vorhergehenden Ansprüche, **dadurch gekennzeichnet, dass** die Fensterführungsschiene (1) im Befestigungsbereich (6) Befestigungselemente (12), insbesondere Klipselemente, zur Befestigung aufweist.

10. Modul nach Anspruch 2 und ggf. nach einem der Ansprüche 3 bis 9, **dadurch gekennzeichnet, dass** die seitlichen Führungen (4a, 4b) Führungsfederelemente (13) zum dämpfenden seitlichen Halten der Fensterscheibe (5) aufweisen, vorzugsweise, dass die Führungsfederelemente (13) von der Bodenführung (4c) entkoppelt sind, weiter vorzugsweise, dass die Führungsfederelemente (13) durch Schlitze (13a) im Boden und/oder in der Führung (4a, 4b) von der Bodenführung (4c) entkoppelt sind.

11. Modul nach einem der vorhergehenden Ansprüche, **dadurch gekennzeichnet, dass** der Führungsbereich (4) zumindest teilweise oberflächenbehandelt, insbesondere beflockt, ist, und/oder, dass im Führungsbereich (4) ein biegeschlaffes Flachmaterial (15) angeordnet ist, vorzugsweise, dass das biegeschlaffe Flachmaterial (15) durch ein Spritzgussmaterial bei der Herstellung der Fensterführungsschiene (1) hinterspritzt wurde.

12. Modul nach einem der vorhergehenden Ansprüche, **dadurch gekennzeichnet, dass** die Fensterführungsschiene (1) an dem Modulträger (2) verspannt befestigt ist.

13. Modul nach einem der vorhergehenden Ansprüche, **dadurch gekennzeichnet, dass** der Modulträger (2) Halteschienen (17) aufweist, welche die Fensterführungsschiene (1) seitlich halten.

14. Verfahren zur Montage einer Fensterführungsschiene (1) an einem Modulträger (2) zur Herstellung eines Moduls nach einem der vorhergehenden Ansprüche, wobei vor oder während der Befestigung an dem Modulträger (2) die Fensterführungsschiene (1) zumindest um die Höhenrichtung (H) gebogen wird.

## Claims

1. Module for a motor vehicle, wherein a module carrier (2), a window guide rail receptacle (16) and a window guide rail (1), accommodated therein, for a motor vehicle are provided, wherein the window guide rail has a channel-like guide region (4) for guiding a window pane (5) and a fastening region (6) for fastening the window guide rail (1), wherein the window guide rail (1) extends in an elongate manner and provides, over a height (h) of the channel-like guide region (4), a lateral guide for the window pane (5), and wherein the window guide rail (1), in order to be fitted, is bendable at least about the vertical direction (H) along its longitudinal extent and the guide region (4), in the bent state, provides the function of guiding the window pane (5),
wherein the window guide rail, in the bent state, is fastened to the module carrier and imposes a contour on the window guide rail receptacle of the window guide rail by way of the fastening.

2. Module according to Claim 1, **characterized in that** the bendability of the window guide rail (1) about the vertical direction (H) is at least partially elastic.

3. Module according to Claim 1 or 2, **characterized in that** the guide region (4) has two lateral guides (4a, 4b), which support the window pane (5) in a transverse direction transverse to the see-through surface (5a) of the window pane (5), and/or **in that** the guide region (4) has a bottom guide (4c) for guiding the end side (5b) of the window pane (5).

4. Module according to one of the preceding claims, **characterized in that** the fastening region (6) of the window guide rail (1) laterally has a supporting edge (4) or two supporting edges (4) or several supporting edges (7) in the manner of a flange for supporting the guide region (4), in particular the lateral guides (4a, 4b) .

5. Module according to one of the preceding claims, optionally according to Claim 4, **characterized in that** the window guide rail (1) is locally weakened in order to establish or improve the bendability along its longitudinal extent, preferably **in that** the supporting edge (7) or the supporting edges (7) is/are locally weakened, further preferably **in that** not only are the supporting edges (7) locally weakened, but also the bottom guide (4c) of the window guide rail (1) is locally weakened.

6. Module according to Claim 4 and optionally according to Claim 5, **characterized in that** the weakening of the window guide rail (1) is realized by cutouts (10).

7. Module according to Claim 4 and optionally according to one of Claims 5 and 6, **characterized in that** the fastening region (6) is configured for fastening the window guide rail (1) to a module carrier (2), preferably **in that** the supporting edges (7) of the fastening region (7) have support portions (8) for transmitting forces picked up by the window guide rail (1) to the module carrier (2).

8. Module according to one of the preceding claims, **characterized in that** the window guide rail (1) has spring elements (11) for setting the bendability of the window guide rail (1), preferably **in that** the spring elements (11) are configured in a wavy and/or hourglass-shaped manner.

9. Module according to one of the preceding claims, **characterized in that** the window guide rail (1) has, in the fastening region (6), fastening elements (12), in particular clip elements, for fastening.

10. Module according to Claim 2 and optionally according to one of Claims 3 to 9, **characterized in that** the lateral guides (4a, 4b) have guide spring elements (13) for laterally holding the window pane (5) in a damping manner, preferably **in that** the guide spring elements (13) are decoupled from the bottom guide (4c), further preferably **in that** the guide spring elements (13) are decoupled from the bottom guide (4c) by slots (13a) in the bottom and/or in the guide (4a, 4b) .

11. Module according to one of the preceding claims, **characterized in that** the guide region (4) is at least partially surface treated, in particular flocked, and/or **in that**, in the guide region (4), a flexible flat material (15) is arranged, preferably **in that** the flexible flat material (15) was back-moulded by an injection-moulding material during the production of the window guide rail (1).

12. Module according to one of the preceding claims, **characterized in that** the window guide rail (1) is fastened to the module carrier (2) in a braced manner.

13. Module according to one of the preceding claims, **characterized in that** the module carrier (2) has holding rails (17), which laterally hold the window guide rail (1).

14. Method for fitting a window guide rail (1) on a module carrier (2) in order to produce a module according to one of the preceding claims, wherein, before or while being fastened to the module carrier (2), the window guide rail (1) is bent at least about the vertical direction (H).

## Revendications

1. Module pour un véhicule automobile, dans lequel un support de module (2), un logement de rail de guidage de fenêtre (16) et un rail de guidage de fenêtre (1) logé à l'intérieur sont prévus pour un véhicule automobile, le rail de guidage de fenêtre comportant une zone de guidage (4) de type canal pour le guidage d'une vitre de fenêtre (5) et une zone de fixation (6) pour la fixation du rail de guidage de fenêtre (1), le rail de guidage de fenêtre (1) s'étendant de façon allongée et un guide latéral étant mis à disposition pour la vitre de fenêtre (5) sur toute une hauteur (h) de la zone de guidage (4) de type canal et le rail de guidage de fenêtre (1) pouvant être arqué pour son montage le long son extension longitudinale au moins autour de la direction en hauteur (H) et la zone de guidage (4) mettant à disposition la fonction de guidage de la vitre de fenêtre (5) dans l'état arqué, le rail de guidage de fenêtre étant fixé au support de module à l'état arqué et le logement de rail de guidage de fenêtre du rail de guidage de fenêtre contraignant un contour en le fixant.

2. Module selon la revendication 1, **caractérisé en ce que** la souplesse du rail de guidage de fenêtre (1) est au moins en partie élastique autour de la direction en hauteur (H).

3. Module selon la revendication 1 ou 2, **caractérisé en ce que** la zone de guidage (4) comporte deux guides latéraux (4a, 4b) arrêtant la vitre de fenêtre (5) dans une direction transversale transversalement à la surface visible transparente (5a) de la vitre de fenêtre (5) et/ou que la zone de guidage (4) comporte un guide de fond (4c) pour le guidage du côté avant (5b) de la vitre de fenêtre (5).

4. Module selon l'une quelconque des revendications précédentes, **caractérisé en ce que** la zone de fixation (6) du rail de guidage de fenêtre (1) comporte en côté une arête (4) ou deux arêtes d'arrêt (4) ou plusieurs arêtes d'arrêt (7) à la façon d'un flasque pour l'arrêt de la zone de guidage (4), notamment des guides latéraux (4a, 4b).

5. Module selon l'une quelconque des revendications précédentes, le cas échéant selon la revendication 4, **caractérisé en ce que** le rail de guidage de fenêtre (1) est fragilisé localement pour réaliser ou améliorer la souplesse le long de son extension longitudinale, de préférence que l'arête d'arrêt (7) ou les arêtes d'arrêt (7) est fragilisée et/ou sont fragilisées localement, de façon davantage préférée que non seulement les arêtes d'arrêt (7) sont fragilisées localement mais que le guide de fond (4c) du rail de guidage de fenêtre (1) est lui aussi fragilisé localement.

6. Module selon la revendication 4 et le cas échéant selon la revendication 5, **caractérisé en ce que** la fragilisation du rail de guidage de fenêtre (1) est réalisée par le biais d'évidements (10).

7. Module selon la revendication 4 et le cas échéant selon l'une quelconque des revendications 5 ou 6, **caractérisé en ce que** la zone de fixation (6) est réalisée pour fixer le rail de guidage de fenêtre (1) à un support de module (2), de préférence que les arêtes d'arrêt (7) de la zone de fixation (7) comportent des sections d'arrêt (8) pour la transmission au support de module (2) des forces absorbées par le rail de guidage de fenêtre (1).

8. Module selon l'une quelconque des revendications précédentes, **caractérisé en ce que** le rail de guidage de fenêtre (1) comporte des éléments de ressort (11) pour le réglage de la souplesse du rail de guidage de fenêtre (1), de préférence que les éléments de ressort (11) sont réalisés en forme de lignes ondulées et/ou en forme de sablier.

9. Module selon l'une quelconque des revendications précédentes, **caractérisé en ce que** le rail de guidage de fenêtre (1) comporte des éléments de fixation (12) dans la zone de fixation (6), notamment des éléments clipsés, pour la fixation.

10. Module selon la revendication 2 et le cas échéant selon l'une quelconque des revendications 3 à 9, **caractérisé en ce que** les guides latéraux (4a, 4b) comportent des éléments de guidage de ressort (13) pour amortir l'arrêt latéral de la vitre de fenêtre (5) de préférence que les éléments de guidage de ressort (13) sont découplés par le guide de fond (4c), de façon davantage préférée que les éléments de guidage de ressort (13) sont découplés du guide de fond (4c) par des fentes (13a) placés au fond et/ou dans le guide (4a, 4b).

11. Module selon l'une quelconque des revendications précédentes, **caractérisé en ce que** la zone de guidage (4) est au moins en partie traitée en surface, notamment floquée et/ou qu'un matériau plat (15) lâche en flexion est disposé dans la zone de guidage (4), de préférence que le matériau plat (15) lâche en flexion est surmoulé par injection à l'aide d'une matière de moulage par injection lors de la fabrication du rail de guidage de fenêtre (1).

12. Module selon l'une quelconque des revendications précédentes, **caractérisé en ce que** le rail de guidage de fenêtre (1) est fixé de façon serrée au support de module (2).

13. Module selon l'une quelconque des revendications précédentes, **caractérisé en ce que** le support de module (2) comporte des rails d'arrêt (17) arrêtant en côté le rail de guidage de fenêtre (1).

14. Procédé de montage d'un rail de guidage de fenêtre (1) au niveau d'un support de module (2) pour la fabrication d'un module selon l'une quelconque des revendications précédentes, le rail de guidage de fenêtre (1) étant arqué au moins autour de la direction en hauteur (H) avant ou pendant la fixation au support de module (2).
